(19) Europäisches Patentamt
European Patent Office
Office européen des brevets

(11) **EP 3 982 217 A1**

(12) **EUROPEAN PATENT APPLICATION**

(43) Date of publication:
**13.04.2022 Bulletin 2022/15**

(51) International Patent Classification (IPC):
**G05B 19/4065** (2006.01)     **G05B 19/418** (2006.01)

(21) Application number: **20201315.7**

(52) Cooperative Patent Classification (CPC):
**G05B 19/41875; G05B 19/4065**

(22) Date of filing: **12.10.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Kharlamov, Evgeny
  81829 Muenchen (DE)**
• **Pychynski, Tim
  76137 Karlsruhe (DE)**
• **Zhou, Baifan
  71229 Leonberg (DE)**
• **Svetashova, Yulia
  73730 Esslingen am Neckar (DE)**

Remarks:
Amended claims in accordance with Rule 137(2)
EPC.

(54) **METHOD AND SYSTEM FOR MONITORING A MANUFACTURING PROCESS**

(57)     A computer-implemented method (100) for predicting a target indicator (TI) of a technical system (300), comprising at least the steps of
providing (110) a set of data (D) comprising at least data (D1) of a first type and at least data (D2) of a second type, transforming (120a) at least the data (D1) of the first type into a first processed subset (D1-P), transforming (120b) at least the data of the second type into a second processed subset (D2-P), transforming (130) at least the first processed subset (D1-P) and the second processed subset (D2-P) into merged data (D-M), and predicting (140) a target indicator (TI) of the technical system (300) based on the merged data (D-M).

Fig. 1

EP 3 982 217 A1

## Description

Background

The disclosure concerns a method and a system for predicting a target indicator of a technical system.

The disclosure concerns further a technical system and method for operating the technical system thereby monitoring the technical system, in particular a manufacturing process of the technical system.

Monitoring of a manufacturing apparatus or a manufacturing process is for example used for quality management or for evaluating the health state of an apparatus.

Machine learning-based quality monitoring of a discrete manufacturing process is a complex process that requires specialized training in machine learning and deep understanding of the data and necessary understanding of the domain and the problem to be addressed.

One objective of the disclosure is to provide a general schema for monitoring of a discrete manufacturing process and/or a manufacturing system used for a discrete manufacturing process.

Disclosure of the invention

An embodiment refers to a computer-implemented method for predicting a target indicator of a technical system, comprising at least the steps of providing a set of data comprising at least data of a first type and at least a data of a second type, transforming at least the data of the first type into a first processed subset, transforming at least the data of the second type into a second processed subset, transforming at least the first processed subset and the second processed subset into merged data, and predicting a target indicator of the technical system based on the merged data. The set of data is processed to predict a target indicator, wherein data of different types of data is processed separately into processed subsets and merged together into merged data.

In one aspect, the data comprises information on features of the technical system. The features may relate to a process, in particular a manufacturing process, which may be performed by the technical system. The information on features of the technical system may be provided as values of parameters of the technical system.

In one aspect at least data of the first type and/or at least data of the second type comprises one of the following formats a single value format or a time series format or an image format or a video format or a log file format.

In one aspect of the method the step of transforming at least the data of the first type into a first processed subset and/or the step of transforming at least the data of the second type into a second processed subset comprises feature engineering. Feature engineering may use domain knowledge related to the technical system to extract features from the data via data mining techniques. Each processed subset may comprise extracted engineered features that characterize latent and/or abstract properties of the technical system, in particular a manufacturing process of the technical system.

In one aspect of the method the step of transforming at least the first processed subset and the second processed subset into merged data comprising merging at least the first processed subset and the second processed subset.

In one aspect, the method comprises at least one step of further processing the merged data.

In one aspect of the method the at least one step of further processing comprises at least one step of feature engineering and/or of data merging and/or of feature reduction. Advantageously, the steps of feature engineering and data merging are repeated in a cascading manner.

Further embodiments refer to a system for predicting a target indicator, wherein the system is configured to perform steps of the method according to the embodiments.

In one aspect, the system comprises at least one of a data integration module and/or at least two feature engineering modules and/or at least one concatenation module and/or at least one prediction module and/or at least one data reduction module and/or at least one data integration module. At least one of the modules may be implemented in software.

In one aspect, the prediction module comprises at least a machine-learning module and/or a data reduction module or at least a neural network.

Further embodiments refer to a method of training a system according to the embodiments to perform a method for predicting a target indicator according to the embodiments. In particular, a machine-learning module or a neural network of the system may be trained for predicting the target indicator. The system may be developed for multiple different datasets to solve several tasks with similarity. The system is efficiently maintainable and extensible for future scenarios.

Further embodiments refer to a technical system, in particular a manufacturing system, wherein the technical system comprises a system for predicting a target indicator according to the embodiments and/or the technical system is configured to perform steps of the method for predicting a target indicator according to the embodiments.

In one aspect of the technical system the target indicator comprises at least information on a state, in particular a health state, of the technical system and/or information on a process, in particular a manufacturing process, of the technical system and/or a manufactured product of the technical system. The target indicator may be used for control and/or optimization of the technical system and/or of a process of the technical system.

Further embodiments refer to a method for operating a technical system, in particular a manufacturing system, according to the embodiments.

In one aspect, the method comprises at least the steps of collecting data of the technical system, providing the data as a set of data comprising at least data of a first type and at least a data comprising of a second type, transforming at least the data of the first type into a first processed subset, transforming at least the data of the second type into a second processed subset, transforming at least the first processed subset and the second processed subset into merged data, and predicting a target indicator of the technical system based on the merged data, adapting the technical system based on the target indicator.

Further advantageous embodiments are derivable from the following description and the drawing. In the drawing

Fig. 1    schematically depicts aspects of a method for predicting a target indicator,

Fig. 2    schematically depicts steps of a method for predicting a target indicator in a flow diagram,

Fig. 3    schematically depicts aspects of a system for predicting a target indicator

Fig. 4    schematically depicts aspects of a technical system,

Fig. 5    schematically depicts aspects of a method for operating a technical system, and

Fig. 6    schematically depicts aspects of a machine-learning pipeline according to an exemplary embodiment.

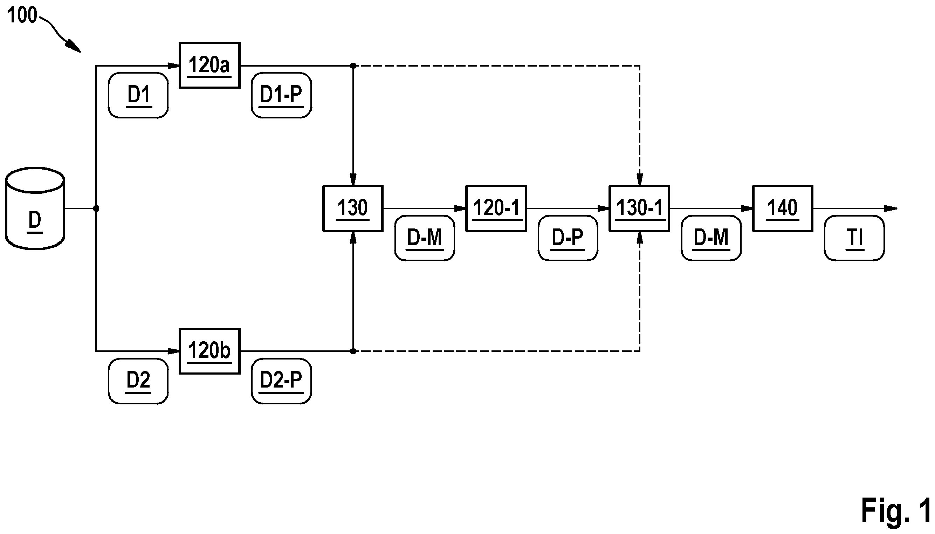

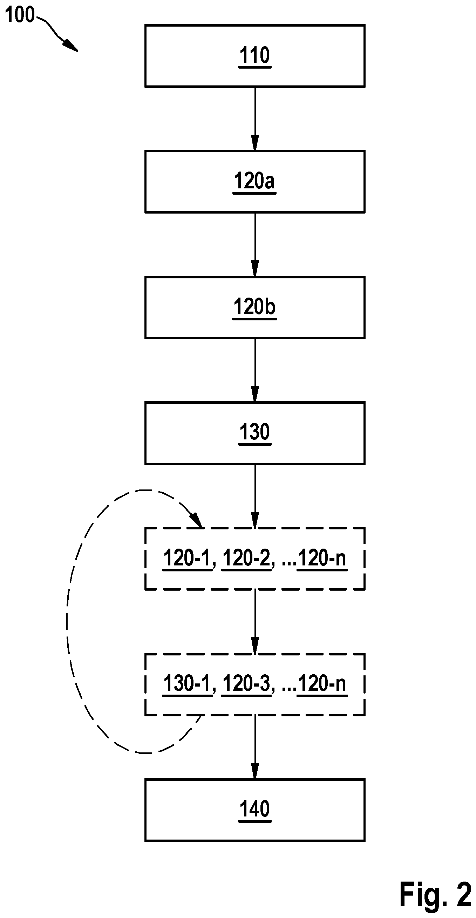

A method 100 for predicting a target indicator TI of a technical system is described below with reference to figure 1 and figure 2. The technical system is for example a manufacturing system, which is configured to perform a manufacturing process. The predicted target indicator can be used in the technical system, in particular a manufacturing system, for the following purposes: monitoring a health state of the technical system for predictive maintenance, monitoring product quality of a manufactured product for product quality control, and predicting desired system parameters for system control or optimization of technical system.

The computer-implemented method 100 for predicting the target indicator TI of the technical system comprises at least
a step 110 of providing a set of data D comprising at least data D1 of a first type and at least a data D2 of a second type,
a step 120a of transforming at least the data D1 of the first type into a first processed subset D1-P,
a step 120b of transforming at least the data of the second type into a second processed subset D2-P,

a step 130 of transforming at least the first processed subset D1-P and the second processed subset D2-P into merged data D-M, and
a step 140 of predicting the target indicator TI of the technical system based on the merged data D-M.

In the steps 120a and 120b data D1, D2 of different types of data is processed separately into processed subsets D1-P, D2-P. In step 130 the processed subset D1-P and D2-P are merged together into merged data D1.

Although in figures 1 and 2, only data D1, D2 of two different types of data is displayed, the Data D may comprise data of more than two different types of data. According to an embodiment, the data comprises information on features of the technical system. For example, the features relate to the technical system and/or to a process, in particular a manufacturing process, which can be performed by the technical system.

According to an embodiment, data of the data D is provided in different formats of data. Formats of data are for example a single value format or a time series format or an image format or a video format or a log file format.

According to an embodiment, data D1 of the first type and/or data D2 of the second type comprises one of the following formats a single value format or a time series format or an image format or a video format or a log file format.

According to an embodiment, the step 120a of transforming the data D1 of the first type into a first processed subset D1-P and/or the step 120b of transforming the data D2 of the second type into a second processed subset D2-p comprises feature engineering. Feature engineering uses domain knowledge related to the technical system to extract features from the data via data mining techniques. Each processed subset, for example the first processed subset D1-P and the second processed subset D2-P, comprise extracted engineered features that characterize latent and/or abstract properties of the technical system, in particular a manufacturing process of the technical system.

According to an embodiment, the step 130 of transforming at least the first processed subset D1-P and the second processed subset D2-P into merged data D-M comprises merging at least the first processed subset D1-P and the second processed subset D2-P.

According to an embodiment, the method 100 comprises at least one step of further processing the merged data. This is depicted in figure 1 and figure 2 by steps 120-1, 130-1 and 120-1, 120-2, ..., 120-n, 130-1, 130-2 ,..., 130-n respectively.

According to an embodiment, the steps 120-1, 120-2,... 120-n comprise further feature engineering on the merged data D-M.

According to an embodiment, the steps 130-1, 130-2,... 130-n comprise further data merging, in particular merging the data of the previous feature engineering step with the first processed subset D1- P and the second process subset D2-P.

According to an embodiment, the steps of feature engineering 120-1, 120-2, ..., 120-n and the steps of data merging 130-1, 130-2, ..., 130-n are performed repetitively in a cascading manner.

According to an embodiment, the step 140 of predicting the target indicator TI of the technical system based on the merged data D-M is performed using a trained machine-learning module or trained neural network.

According to an embodiment, when the trained machine-learning module is used, the method 100 comprise at least one step of feature reduction.

According to another embodiment, when the trained neural network is used, feature reduction can be performed by the neural network itself.

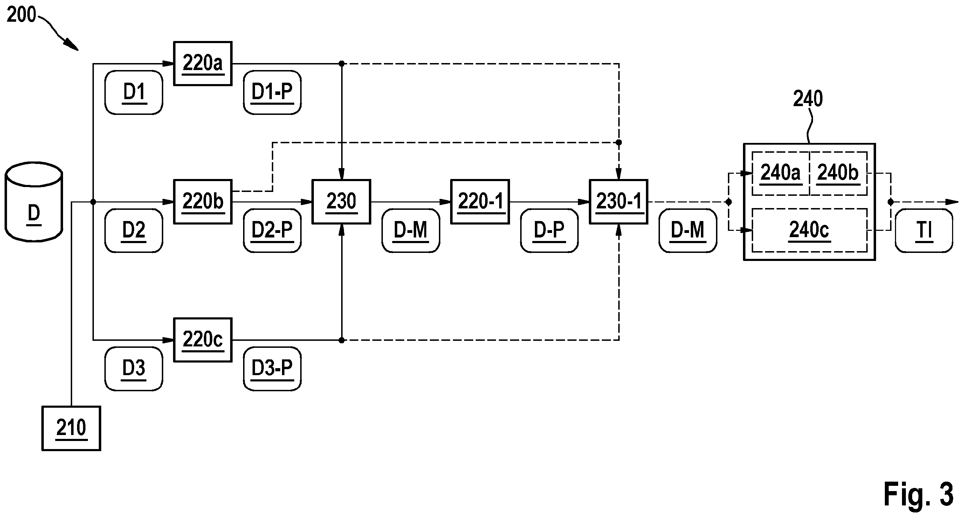

An embodiment of a system 200 for predicting a target indicator TI is depicted in figure 3. The system 200 is configured to perform steps of the method 100 as described according to the embodiments. In the following, several modules of the system 200, preferably implemented in software, are described.

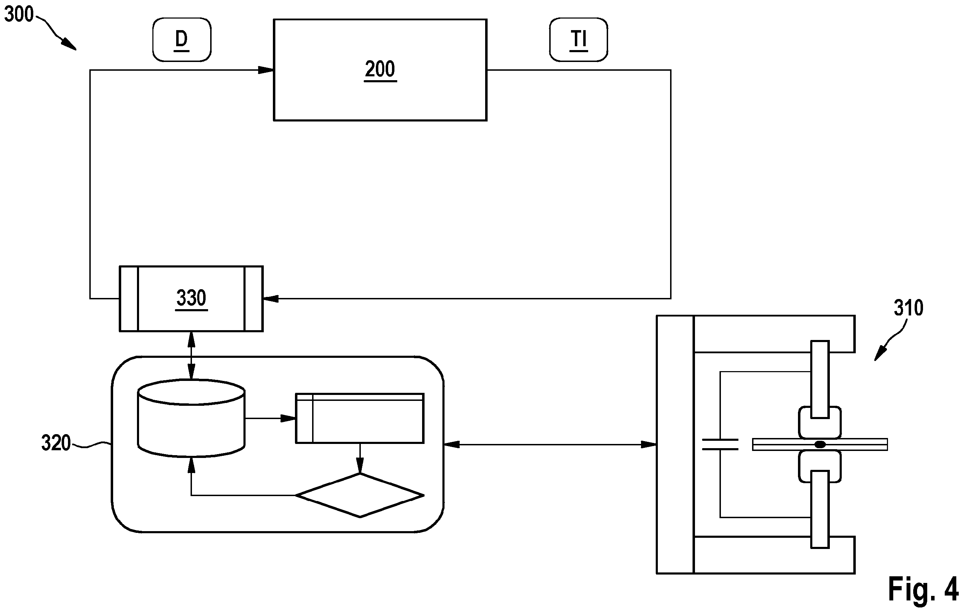

According to the embodiment, the system 200 comprises a data integration module 210. The data integration module 210 is configured to provide 110 the set of data D comprising at least data D1 of a first type and at least data D2 of a second type. Therefore, the data integration module may be configured with at least one of the following functionalities: extracting and/or cleaning and/or integrating data of a technical system. The data of the technical system may be pulled from the technical system by the data transmission protocol, see figure 4. The integrated data can contain identifiers, single features, time series, images, etc.

According to the embodiment, the system 200 comprises a first feature engineering module 220a, a second feature engineering module 220b and a third feature engineering module 220c. The first feature engineering module 220a is configured to process data D1 of a first type into a first processed data set D1-P. The second feature engineering module 220b is configured to process data D2 of a second type into a second processed data set D2-P and the third feature engineering module 220c is configured to process data D3 of a third type into a third processed data set D3-P.

Each of the first, second and third feature engineering modules 220a, 220b, 220c may be implemented as one of the following feature engineering modules.

A feature engineering on single features module, SF module, generates new single features by extracting single features from data comprising a single value format. The SF module may be further divided into sub-modules, in particular parallel sub-modules. Each sub-module may process a group of single features, or even a single feature, by a specified feature engineering algorithm to extract single features. This SF module may be further divided in sequential sub-modules for further processing the extracted single features. The final resulting features outputted as a processed subset by the SF module may be named as engineered single features, EngSF.

A feature engineering on times series module, TS module, generates new time series features by extracting features from data comprising a single time series format. The TS module may work similar to the SF module. Accordingly, the TS module may be further divided into parallel and/or sequential sub-modules. The final resulting features outputted as a processed subset by the TS module may be named as engineered time series features, EngTS.

At least one further feature engineering module may be implemented as feature engineering on other data module. This module generates new features by extracting features from data comprising formats such as images, videos, log files, etc. This module may work similarly as the SF and/or the TS module. Accordingly, this module may be further divided into parallel and/or sequential sub-modules. The final resulting features outputted as processed subset by this module may be named as engineered image features, engineered video features, engineered log file features etc. and/or summarized as engineered features, EngF, to denote all groups.

According to the embodiment, the system 200 comprises a first concatenation module 230. The concatenation module 230 is configured to merge the first processed data set D1-P of the first feature engineering module 220a, the second processed data set D2-P of the second feature engineering module 220b and the third processed data set D3-P of the third feature engineering module 220c into merged data D-M. Referring to the description of the feature engineering modules SF module, TS module and other data module, the concatenation module 230 is configured to merge the engineered features EngSF, EngTS and EngF.

According to the embodiment, the system 200 comprises a further feature engineering module 220-1. The feature engineering module 220-1 is configured to process the merged data D-M, i.e. the concatenated engineered features EngSF, EngTS and EngF, into processed data D-P.

According to the embodiment, the system 200 comprises a further concatenation module 230-1. The concatenation module 230-1 is configured to merged the processed data D-P from the previous feature engineering module 220-1 together with the first processed data set D1-P of the first feature engineering module 220a, the second processed data set D2-P of the second feature engineering module 220b and the third processed data set D3-P of the third feature engineering module 220c into merged data D-M.

Although not depicted in figure 3, according to an embodiment, the system 200 comprises one or more further concatenation modules 230-2,..., 230-n, and/or one or more further feature engineering modules 220-2, ..., 220-n. Advantageously, the steps of concatenation and feature engineering are repeated with the further concatenation modules 230-2,..., 230-n, and the further feature engineering modules 220-2, ..., 220-n in a cascading manner.

According to the embodiment, the system comprises a prediction module 240. The prediction module is configured to predict 140 the target indicator TI.

According to one embodiment, the prediction module 240 is implemented comprising a data reduction module 240a and a machine-learning module 240b. The data reduction module 240a reduces the merged data D-M, i.e. the final concatenated features, to aggregate the essential information necessary for machine learning modelling. The machine-learning module 240b is subsequent to the data reduction module 240a and is configured to perform machine learning modelling to predict the target indicators TI.

According to an alternative embodiment, the prediction module 240 comprises a neural network module 240c. Advantageously, the neural network is configured to predict the target indicator, thereby fulfilling both functionalities of the feature reduction and machine learning modelling.

Further embodiments refer to a method of training the system 200 according to the embodiments to perform the method 100 for predicting a target indicator TI according to the embodiments.

According to an embodiment, the method of training the system 200 comprises feeding the system 200 with data of a technical system, in particular a discrete manufacturing process of the technical system, being at least one of the following data:

target indicator TI, for example of a health state of the technical system or product quality of a product manufactured with the technical system, whose prediction is the central task of monitoring, and/or

identifiers, for example unique identifiers for each manufacturing operation, and/or

data of a first type of data, i.e. feature with a single value format, for example numerical features like product count, or categorical features, such as a control mode, and/or

data of a second type of data, i.e. features with a time series format, for example a sequences of numeric values with temporal structure, e.g. signals continuously collected by sensors, and/or

data of a third type of data, i.e. feature with an image format, for example groups of numeric values with spatial structure, and/or

data of further types of data, i.e. features with other types of data formats, e.g. images, videos, log-files.

Further embodiments refer to a technical system, in particular a manufacturing system. An embodiment of the technical system is depicted schematically in figure 4.

According to the embodiment, the technical system 300 comprises a system 200 for predicting a target indicator according to the embodiments. The technical system 300 is configured to perform steps of the method 200 for predicting a target indicator according to the embodiments.

The method 100 and/or the system 200 for predicting a target indicator TI can be applied in the technical system 300 to process monitoring of discrete manufacturing processes. Discrete manufacturing processes are comprised of single operations, each producing a distinct, countable item, e.g. a welding spot on a car-body. Products of such manufacturing are easily identifiable and differ greatly from continuous process manufacturing where the products are undifferentiated.

In process monitoring of discrete manufacturing processes, for example two common types of scenarios exist:

The assessment, estimation or prediction of the produced product, often quantified by some quality indicators, e.g. tensile shear strength or diameter of the welding spot, and

the assessment, estimation or prediction of health state of the technical systems that performs the manufacturing operations. A machine health state is often quantified by some machine status indicators, e.g. remaining tool lifespan, quality failure probability.

The target indicator may be used for control and/or optimization of the technical system and/or of a process of the technical system.

According to the embodiment, the technical system 300 comprises a manufacturing machine 310. The manufacturing machine 310 is configured to perform the manufacturing process. According to the embodiment, the manufacturing machine 310 comprises at least one sensor to perform measurements referring to the manufacturing process.

According to the embodiment, the technical system 300 comprises a control system 320, which is configured to control the manufacturing machine 310. Further, the control is configured to collect and/or store the data of the technical system 300, in particular of the manufacturing machine 310, in particular from measurements. The data collected from discrete manufacturing processes comprises for example
target indicator TI, for example of a health state of the technical system or product quality of a product manufactured with the technical system, whose prediction is the central task of monitoring, and/or
identifiers, for example unique identifiers for each manufacturing operation, and/or

data of a first type of data, i.e. feature with a single value format, for example numerical features like product count, or categorical features, such as a control mode, and/or

data of a second type of data, i.e. features with a time series format, for example a sequences of numeric values with temporal structure, e.g. signals continuously collected by sensors, and/or

data of a third type of data, i.e. feature with an image format, for example groups of numeric values with spatial structure, and/or

data of further types of data, i.e. features with other types of data formats, e.g. images, videos, log-files.

According to the embodiment, the technical system 300 comprises a data transmission protocol 330. The data transmission protocol is implemented to pull data from the control system 320, in particular to provide data to the system 200, in particular to the integration module 210.

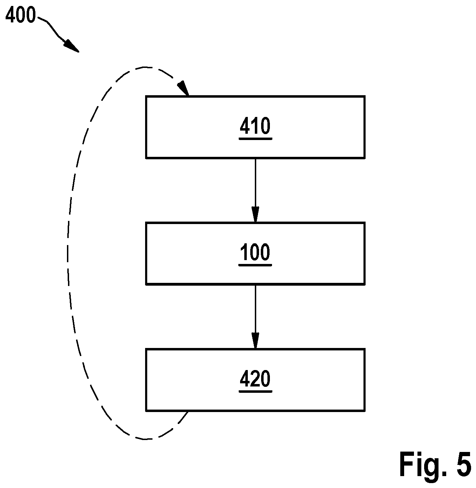

Further embodiments refer to a method 400 for operating a technical system 300, in particular a manufacturing system, according to the embodiments. Steps of the method 400 are schematically depicted in figure 5.

According to the embodiment, the method 400 comprises

a step 410 of collecting data of the technical system, the steps of the method 200, in particular

a step 120a of transforming at least the data D1 of the first type into a first processed subset D1-P,

a step 120b of transforming at least the data of the second type into a second processed subset D2-P,

a step 130 of transforming at least the first processed subset D1-P and the second processed subset D2-P into merged data D-M, and

a step 140 of predicting the target indicator TI of the technical system based on the merged data D-M, and

a step 420 of adapting the technical system based on the target indicator TI.

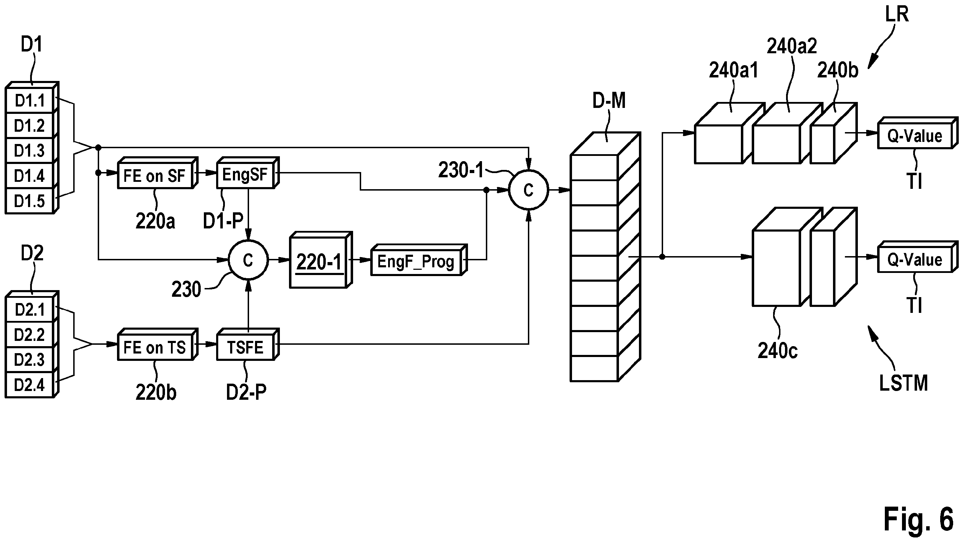

Finally, figure 6 schematically depicts aspects of machine learning pipelines based on feature engineering according to an exemplary embodiment. Aspects of the invention will be described exemplarily in detail with regard to figure 6 by the example of a welding process.

An exemplary quality monitoring task is to maintain the quality-value, Q-Value, as close to 1 as possible for all welding spots during manufacturing. Advantageously, learning of predictions of Q-Values before performing the actual welding allows taking preventive actions if the predicted Q-Value is too low. Preventive actions are for example change parameters of welding machines, replace welding caps, etc. More formally, the following estimation function $f$ maps manufacturing data to the Q-Value of the next welding operation

$$Q_{next} = f(X_1, \ldots, X_{prev-1}, X_{prev}, SF^*_{next}),$$ wherein $X_1, \ldots, X_{prev-1}, X_{prev}$, include data D, for example data D1 of a first type, i.e. features of single value format and data D2 of a second type, i.e. features of time series format, of previous welding operations and $SF^*_{next}$ includes known features of the next welding operation, for example features of a welding program.

Fig. 6 depicts two machine-learning pipelines based on feature engineering. A first pipeline is named as pipeline LR and a second pipeline is named as pipeline LSTM wherein LR and LSTM, Long short-term memory, indicate the machine learning methods used in the respective pipeline. The pipelines LR, LSTM include feature engineering on welding time level, for example on data D2, and on welding operation level, for example on data D1.

Data D2 of a second type comprise raw features of time series format, RawTS. RawTS of different lengths are first padded with different values that are physically meaningful. For example data D2.1 referring to current, D2.4 referring to voltage and D2.3 referring to pulse width modulation are padded with zero, since after welding these parameters are de facto zero, while data D2.2 referring to resistance is padded with the last value, for resistance is the intrinsic property of matter and does not disappear after welding. An exemplary feature engineering strategy comprises extracting statistic features of minimum, maximum, minimum position, maximum position, mean, median, standard deviation, and length, resulting in time series features engineered, TSFE, given by the second processed subset D2-P.

Data D1 of a first type comprise raw features of single value format, RawSF. Feature engineering of RawSF results in engineered single features, EngSF, given by the first processed subset D1-P. For example, data D1.1 refers to count features, D1.2 refers to status, D1.3 refers to process curve means, D1.4 refers to quality indicators, and D1.5 refers to program numbers, ProgNo.

Count Features include for example WearCount, which records the number of welded spots since last dressing, DressCount, which records the number of dressings performed since last cap change, and CapCount, which records the number of cap changes. Feature engineering on count feature results for example in the following: WearDiff is calculated as the difference between WearCount of two consecutive welding operations, characterising the degree of change of wearing effect. NewDress will be ONE after each dressing, and ZERO otherwise. NewCap will be ONE after each Cap Change, and ZERO otherwise.

Status describes the operating or control status of the welding operation, e.g. System Component Status, Monitor Status, and Control Status.

Process Curve Means are the average values of the process curves and their welding stages calculated by the welding software system. TSFE, given by the processed data subset D2-P serves as supplementary information to the Process Curve Means in RawSF. Thus, times series on the welding time level are reduced to TSFE on the welding operation level. Reference curves of the same welding program are likely to be identical, so for efficiency reasons it is not required to generate TSFE from them.

Quality Indicators are categorical or numerical values describing the quality of the welding operations, e.g. Process Stability Factor, HasSpatter, and the output feature Q-Value.

ProgNo are nominal numbers of the welding programs, each prescribing a set of welding configurations.

According to fig. 6, data D1 is concatenated with the first processed subset D1-P and the second processed subset D2-P and further processed by advanced feature engineering with respect to ProgNo by module 220-1, resulting in engineered features with respect to program numbers, EngF_Prog. The EngF_Prog incorporate information of program numbers by decompose the concatenated RawSF, EngSF and TSFE, which form time series on the welding operation level, to sub-time-series with respect to ProgNo. Each sub-time-series only belongs to one ProgNo. The EngF_Prog include RawSF_Prog, EngSF_Prog, and TSFE_Prog. After that, the RawSF, EngSF, EngF_Prog and TSFE are then again concatenated by module 230-1 330and reshaped resulting in merged data D-M.

The merged data D-M can be directly modelled by a LSTM neural network 240c, corresponding to the FE-LSTM pipeline.

Alternatively, the merged data D-M can also be flattened by a flattening module 240a1, and reduced by feature selection by a reduction module 240a2 and modelled by a LR machine learning module 240b, corresponding to the FE-LR pipeline.

**Claims**

1.  A computer-implemented method (100) for predicting a target indicator (TI) of a technical system (300), comprising at least the steps of providing (110) a set of data (D) comprising at least data (D1) of a first type and at least data (D2) of a second type, transforming (120a) at least the data (D1) of the first type into a first processed subset (D1-P), transforming (120b) at least the data (D2) of the second type into a second processed subset (D2-P), transforming (130) at least the first processed subset (D1-P) and the second processed subset (D2-P) into merged data (D-M), and predicting (140) a target indicator (TI) of the technical system (300) based on the merged data (D-M).

2.  The method (100) according to claim 1, wherein the data (D) comprises information on features of the technical system (300).

3.  The method (100) according to any of the claims 1 or 2, wherein at least data (D1) of the first type and/or at least data (D2) of the second type comprises one of the following formats a single value format or a time series format or an image format or a video format or a log file format.

4.  The method (100) according to any of the preceding claims, wherein the step (120a) of transforming at least data (D1) of the first type into a first processed subset (D1-P) and/or the step (120b) of transforming at least data (D2) of the second type into a second processed subset (D2-P) comprises feature engineering.

5.  The method (100) according to any of the preceding claims, wherein the step of transforming (130) at least the first processed subset (D1-P) and the second processed subset (D2-P) into merged data (D-M) comprising merging at least the first processed subset (D1-P) and the second processed subset (D2-P).

6.  The method (100) according to any of the preceding claims, wherein the method comprises at least one step of further processing (120-1, 130-1) the merged data (D-M).

7.  The method (100) according to any of the preceding claims, wherein the at least one step of further processing comprises at least one step (120-1) of feature engineering and/or a step of data merging (130-1) and/or a step of feature reduction.

8.  A system (200) for predicting a target indicator (TI), wherein the system (200) is configured to perform steps of the method (100) according to any of the claims 1 to 7.

9.  The system (200) of claim 8, wherein the system (200) comprises at least one of a data integration module (210) and/or at least two feature engineering modules (220a, 220b) and/or at least one concatenation module (230) and/or at least one prediction module (240).

10. The system (200) of claim 9, wherein the prediction module (240) comprises at least a machine-learning module (240b) and/or at least one data reduction module (240b) and/or at least a neural network (240c).

11. Method of training a system (200) according to any of the claims 8 to 10 to perform a method (100) for predicting a target indicator (TI) according to any of the claims 1 to 7.

12. Technical system (300), in particular a manufacturing system, wherein the technical system (300) comprises a system (200) for predicting a target (TI) indicator according to any of the claims 8 to 10 and/or wherein the technical system (300) is configured to perform steps of the method (200) for predicting a target indicator (TI) according to any of the claims 1 to 7.

13. The technical system (300) according to claim 12, wherein the target indicator (TI) comprises at least information on a state, in particular a health state, of the technical system (300) and/or information on a process, in particular a manufacturing process, of the technical system (300) and/or a manufactured product of the technical system (300).

14. Method (400) for operating a technical system (300), in particular a manufacturing system, according to any of the claims 12 or 13, wherein the method (400) comprises at least a step (410) of collecting data of the technical system, a step (110) of providing the data as a set of data (D) comprising at least data (D1) of a first type and at least data (D2) of a second type, a step (120a) of transforming at least data (D1) of the first type into a first processed subset (D1-P), a step (120) of transforming at least data (D2) of the second type into a second processed subset (D2-P), a step (130) of transforming at least the first processed subset (D1-P) and the second processed subset (D2-P) into merged data (D-M), a step (140) of predicting a target indicator (TI) of the technical system (300) based on the merged data (D-M), and a step (420) of adapting the technical system (300) based on the target indicator (TI).

**Amended claims in accordance with Rule 137(2) EPC.**

1. A computer-implemented method (100) for predicting a target indicator (TI) of a technical system (300), comprising at least the steps of providing (110) a set of data (D) comprising at least data (D1) of a first type and at least data (D2) of a second type,

   transforming (120a) at least the data (D1) of the first type into a first processed subset (D1-P), transforming (120b) at least the data (D2) of the second type into a second processed subset (D2-P), wherein the step (120a) of transforming at least data (D1) of the first type into a first processed subset (D1-P) and/or the step (120b) of transforming at least data (D2) of the second type into a second processed subset (D2-P) comprises feature engineering, and transforming (130) at least the first processed subset (D1-P) and the second processed subset (D2-P) into merged data (D-M), at least one step of further processing (120-1, 130-1) the merged data (D-M), wherein the at least one step of further processing comprises at least one step (120-1) of feature engineering, and predicting (140) a target indicator (TI) of the technical system (300) based on the merged data (D-M).

2. The method (100) according to claim 1, wherein the data (D) comprises information on features of the technical system (300).

3. The method (100) according to any of the claims 1 or 2, wherein at least data (D1) of the first type and/or at least data (D2) of the second type comprises one of the following formats a single value format or a time series format or an image format or a video format or a log file format.

4. The method (100) according to any of the preceding claims, wherein the step of transforming (130) at least the first processed subset (D1-P) and the second processed subset (D2-P) into merged data (D-M) comprising merging at least the first processed subset (D1-P) and the second processed subset (D2-P).

5. The method (100) according to any of the preceding claims, wherein the method comprises at least one step of further processing (120-1, 130-1) the merged data (D-M).

6. The method (100) according to any of the preceding claims, wherein the at least one step of further processing comprises at least one step of data merging (130-1) and/or a step of feature reduction.

7. A system (200) for predicting a target indicator (TI), wherein the system (200) is configured to perform steps of the method (100) according to any of the claims 1 to 6.

8. The system (200) of claim 7, wherein the system (200) comprises at least one of a data integration module (210) and/or at least two feature engineering modules (220a, 220b) and/or at least one concatenation module (230) and/or at least one prediction module (240).

9. The system (200) of claim 8, wherein the prediction module (240) comprises at least a machine-learning module (240b) and/or at least one data reduction module (240b) and/or at least a neural network (240c).

10. Method of training a system (200) according to any of the claims 7 to 9 to perform a method (100) for predicting a target indicator (TI) according to any of the claims 1 to 7.

11. Technical system (300), in particular a manufacturing system, wherein the technical system (300) comprises a system (200) for predicting a target (TI) indicator according to any of the claims 7 to 9.

12. The technical system (300) according to claim 11, wherein the target indicator (TI) comprises at least information on a state, in particular a health state, of the technical system (300) and/or information on a process, in particular a manufacturing process, of the technical system (300) and/or a manufactured product of the technical system (300).

13. Method (400) for operating a technical system (300), in particular a manufacturing system, according to any of the claims 11 or 12, wherein the method (400) comprises at least a step (410) of collecting data of the technical system, the steps of the method according to at least on one of the claims 1 to 6 and a step (420) of adapting the technical system (300) based on the target indicator (TI).

Fig. 1

100

110

120a

120b

130

120-1, 120-2, ...120-n

130-1, 120-3, ...120-n

140

Fig. 2

Fig. 3

Fig. 4

400

| 410 |
|:---:|

| 100 |
|:---:|

| 420 |
|:---:|

**Fig. 5**

Fig. 6

EP 3 982 217 A1

Europäisches
Patentamt

European
Patent Office

Office européen
des brevets

# EUROPEAN SEARCH REPORT

Application Number

EP 20 20 1315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/320026 A1 (CHEN JUI-LONG [TW] ET AL) 29 December 2011 (2011-12-29) * paragraphs [0035] - [0089]; figures 1-9 * | 1-14 | INV. G05B19/4065 G05B19/418 |
| X | US 2019/095515 A1 (BUESSER BEAT [IE] ET AL) 28 March 2019 (2019-03-28) * paragraphs [0015] - [0036]; figures 1-7 * | 1-14 | |
| X | LIU CHIEN-LIANG ET AL: "Time Series Classification With Multivariate Convolutional Neural Network", IEEE TRANSACTIONS ON INDUSTRIAL ELECTRONICS, IEEE SERVICE CENTER, PISCATAWAY, NJ, USA, vol. 66, no. 6, 1 June 2019 (2019-06-01), pages 4788-4797, XP011707466, ISSN: 0278-0046, DOI: 10.1109/TIE.2018.2864702 [retrieved on 2019-01-31] * the whole document * | 1-14 | |

TECHNICAL FIELDS
SEARCHED    (IPC)

G05B

The present search report has been drawn up for all claims

| Place of search | Date of completion of the search | Examiner |
|---|---|---|
| The Hague | 19 March 2021 | Sollazzo, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                   

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 20 1315

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2021

| Patent document cited in search report | Publication date | Patent family member(s) | Publication date |
|---|---|---|---|
| US 2011320026 A1 | 29-12-2011 | CN 102299044 A<br>US 2011320026 A1 | 28-12-2011<br>29-12-2011 |
| US 2019095515 A1 | 28-03-2019 | US 2019095515 A1<br>US 2020380017 A1 | 28-03-2019<br>03-12-2020 |

EPO FORM P0459

For more details about this annex : see Official Journal of the European Patent Office, No. 12/82